# EUROPEAN PATENT APPLICATION

(11) **EP 4 852 064 A1**
(43) Date of publication of application: **09.12.2026**
(21) Application number: 24926114.0
(22) Date of filing: 14.03.2024
(51) Int. Cl.: H01M 4/04, B30B 15/30, B30B 3/00, B30B 3/04, B22F 3/18, B22F 3/02, G01F 23/80

(54) **APPARATUS FOR SUPPLYING FIXED QUANTITY OF ELECTRODE MATERIAL POWDER**

(30) Priority: 21.02.2024 KR 20240024986
(71) Applicant: People & Technology Inc., Gumi-si, Gyeongsangbuk-do 39422 (KR)
(72) Inventor: KIM, Joonsup, Gumi-si Gyeongsangbuk-do 39422 (KR); LEE, Youngcheol, Gumi-si Gyeongsangbuk-do 39275 (KR); HWANG, Jeonggyu, Gumi-si Gyeongsangbuk-do 39178 (KR); SHIN, Soonwoo, Gumi-si Gyeongsangbuk-do 39212 (KR)
(74) Representative: BCKIP Part mbB
(86) International application number: PCT/KR2024/003259
(87) International publication number: WO 2025/178165

(57) **Abstract**

The present invention relates to an apparatus for supplying a fixed quantity of an electrode material powder. The apparatus comprises: a hopper, which accommodates electrode material powder provided from the outside and discharges same downward; a first conveyor which is provided below the hopper, and which receives and transfers the electrode material powder discharged from the hopper; a transfer amount adjustment means for adjusting a transfer amount of the electrode material powder transferred through the first conveyor; a second conveyor for receiving and transferring the electrode material powder that passed through the first conveyor; and a pressing unit, which presses the electrode material powder transferred from the second conveyor so as to shape same into a film having a predetermined thickness. The apparatus for supplying a fixed quantity of an electrode material powder, according to the present invention, can adjust, in real time, a supply amount of an electrode material powder, and enables the manufacture of a dry electrode film with a uniform density and thickness by supplying an accurate volume of powder.

## Description

### [Technical Field]

The present invention relates to an apparatus for supplying fixed quantity of electrode material powder and, more particularly, to an apparatus for supplying fixed quantity of electrode material powder that enables real-time adjustment of the supply amount of the electrode material powder and allows a dry electrode film having a uniform density and thickness to be manufactured by supplying an accurate volume of the powder.

### [Background Art]

Unlike a primary battery, which is discarded after a single use, a lithium secondary battery is rechargeable and can be repeatedly reused, and has a high output and excellent charge/discharge performance compared with other secondary batteries. Accordingly, lithium secondary batteries are widely and importantly used in various fields, ranging from mobile information technology (IT) devices, such as smartphones and laptop computers, to power sources for electric vehicles and energy storage systems for storing electricity generated by wind power generation, photovoltaic power generation, or the like.

A secondary battery generally includes four principal components: a positive electrode, a negative electrode, an electrolyte, and a separator. Each of the positive electrode and the negative electrode is manufactured by preparing a slurry by dispersing or dissolving an active material, a conductive material, and a binder in a solvent, coating the slurry onto a current collector, and then performing electrode manufacturing processes including drying, pressing, slitting, and notching. Thereafter, a secondary battery cell is manufactured through an assembly process and an activation process.

However, the wet electrode manufacturing method using a solvent as described above may cause defects, such as pinholes or cracks, during the drying process.

Such pinholes or cracks may occur as the solvent contained in the slurry evaporates. In addition, a powder-floating phenomenon may occur due to differences in the solvent evaporation rate, and such a powder-floating phenomenon may cause deterioration in electrode quality.

To solve the above-described problems, a dry manufacturing method for manufacturing an electrode without using a solvent has been proposed. In the dry manufacturing method, electrode material powder including an active material, a binder, and a conductive material is passed between calender rolls. The electrode material powder having passed through the calender rolls is formed into a dry electrode film having a predetermined thickness and is laminated and fixed onto a current collector.

In this regard, Korean Patent Application Publication No. 10-2022-0052852, entitled "Electrode Powder for Manufacturing Dry Electrode for Secondary Battery, Method for Manufacturing Same, Method for Manufacturing Dry Electrode Using Same, Dry Electrode, Secondary Battery Including Same, Energy Storage Device, and Apparatus for Manufacturing Dry Electrode," has been disclosed.

The disclosed dry electrode manufacturing apparatus includes: a blender configured to mix electrode mixture raw materials including an active material, a conductive material, and a binder; a kneader configured to knead the mixture to form a lump of the mixture so as to fibrillate the binder; a pulverizer configured to pulverize the lump of the mixture to form electrode powder; a calender configured to form the electrode powder into an electrode mixture film; and a lamination roll configured to position the electrode mixture film on at least one surface of a current collector and laminate the electrode mixture film thereto.

Meanwhile, uniformity in thickness and density is important for the electrode mixture film described above. That is, the thickness and density should not locally vary but should be uniform throughout the electrode mixture film. To achieve such uniformity, it is important to supply a fixed amount of electrode powder, that is, electrode material powder. However, conventional dry electrode manufacturing apparatuses do not employ a technology for supplying a fixed amount of electrode material powder.

### [Detailed Description of the Invention]

### [Technical Problem]

The present invention has been made to solve the above-described problems, and an object of the present invention is to provide an apparatus for supplying a fixed quantity of an electrode material powder, which can adjust, in real time, a supply amount of the electrode material powder and enables the manufacture of a dry electrode film with a uniform density and thickness by supplying an accurate volume of the powder.

### [Solution to problem]

As a technical solution for achieving the above object, an apparatus for supplying a fixed amount of electrode material powder according to the present invention includes: a hopper configured to receive electrode material powder supplied from the outside and discharge the electrode material powder downward; a first conveyor installed below the hopper and configured to receive and convey the electrode material powder discharged from the hopper; a conveying amount adjustment means configured to adjust an amount of the electrode material powder conveyed by the first conveyor; a second conveyor configured to receive and convey the electrode material powder that has passed through the first conveyor; and a pressing unit configured to press the electrode material powder transferred from the second conveyor to form the electrode material powder into a film having a predetermined thickness.

In addition, the hopper is provided with a vibrator configured to facilitate the discharge of the electrode material powder.

The first conveyor includes: a driving roller configured to rotate by receiving power from a driving unit; a driven roller disposed to correspond to the driving roller; and a discharge belt supported by the driving roller and the driven roller and configured to circulate, wherein a plurality of powder receiving grooves configured to receive the electrode material powder discharged from the hopper are formed in a surface of the discharge belt.

The powder receiving grooves extend in a width direction of the discharge belt, are arranged at predetermined pitch intervals, and define spaces having the same volume.

The conveying amount adjustment means is configured to adjust the amount of the electrode material powder being conveyed by removing an upper portion of the electrode material powder, and includes: a blade configured to be raised and lowered above the discharge belt; and a height adjustment unit configured to raise and lower the blade to adjust a distance between the blade and the discharge belt.

A first brushing unit is provided at an end portion of the first conveyor and is configured to brush the electrode material powder out of the powder receiving grooves so that the electrode material powder falls onto the second conveyor.

The second conveyor includes: a driving roller configured to rotate by receiving rotational power from a driving unit; a driven roller disposed to correspond to the driving roller; and a conveying belt wound around the driving roller and the driven roller and configured to circulate, wherein an uneven portion configured to prevent slippage of the electrode material powder is formed on a surface of the conveying belt.

The pressing unit includes a pair of pressing rollers spaced apart from each other by a predetermined distance and configured to press the electrode material powder passing therebetween.

### [Advantageous Effect]

The apparatus for supplying a fixed amount of electrode material powder according to the present invention, configured as described above, enables real-time adjustment of the supply amount of the electrode material powder and allows a dry electrode film having a uniform density and thickness to be manufactured by supplying an accurate volume of the powder.

In addition, since a predetermined amount of the electrode material powder can be continuously supplied in the longitudinal direction, an electrode film having a uniform thickness along the longitudinal direction can be manufactured.

### [Description of Drawings]

FIG. 1 is a perspective view of an apparatus for supplying a fixed amount of electrode material powder according to an embodiment of the present invention.
FIG. 2 is a view illustrating the overall configuration and operation of the apparatus for supplying a fixed amount illustrated in FIG. 1.
FIG. 3 is a view illustrating an interlocking operation of the first and second brushes illustrated in FIG. 2.
FIG. 4 is a view illustrating a detailed configuration of the hopper illustrated in FIG. 2.
FIG. 5 is a block diagram illustrating the operation of the hopper illustrated in FIG. 4.
FIG. 6 is a view illustrating a configuration of the scraper illustrated in FIG. 2.
FIGS. 7A and 7B are views illustrating a method of adjusting the supply amount of the electrode material powder using the scraper illustrated in FIG. 6.
FIG. 8 is a view illustrating the operation of the first brushing unit illustrated in FIG. 2.

### [Best Mode for Carrying Out the Invention]

Hereinafter, an embodiment of the present invention will be described in greater detail with reference to the accompanying drawings.

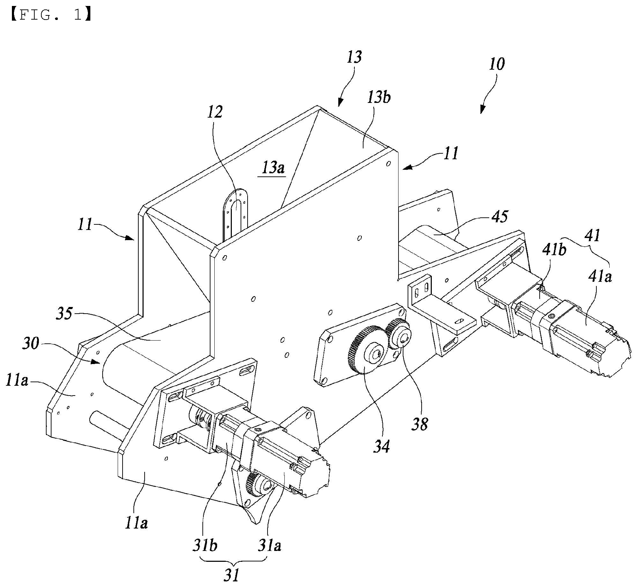

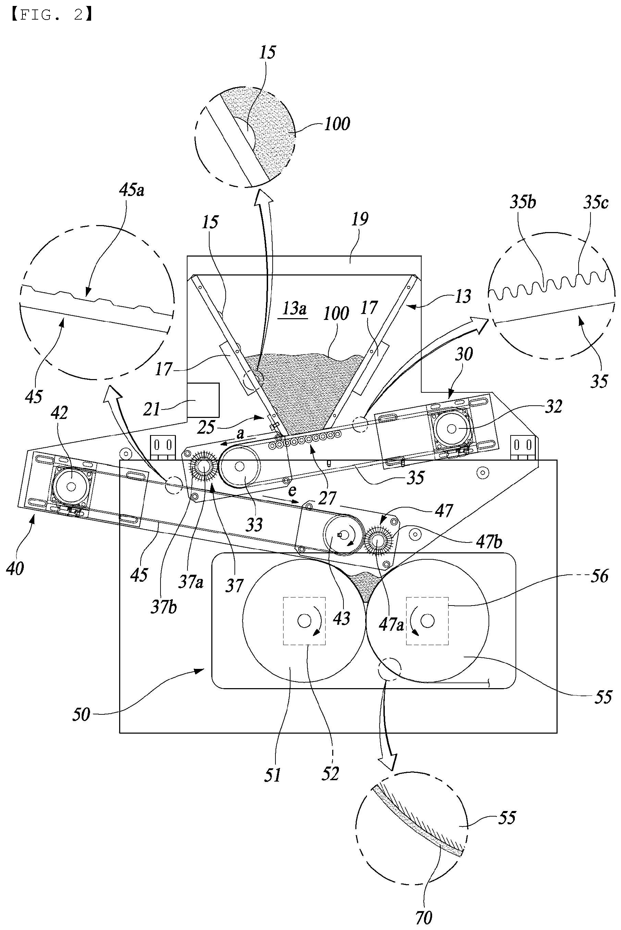

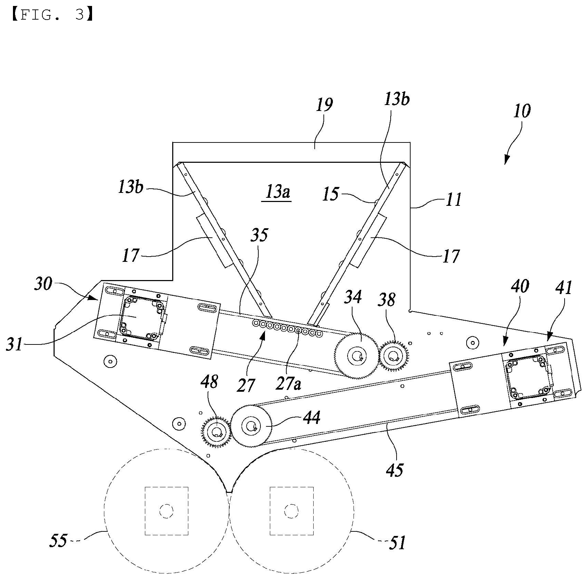

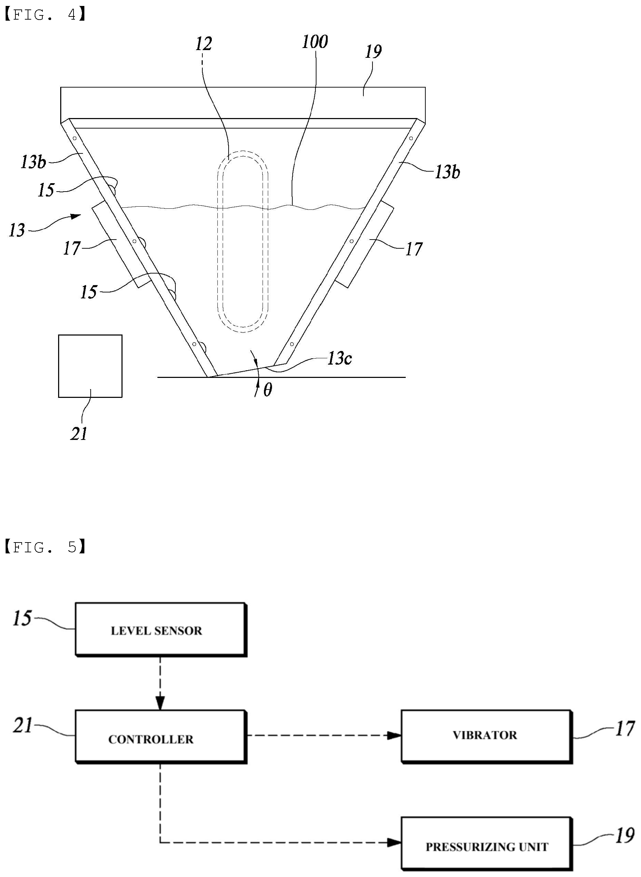

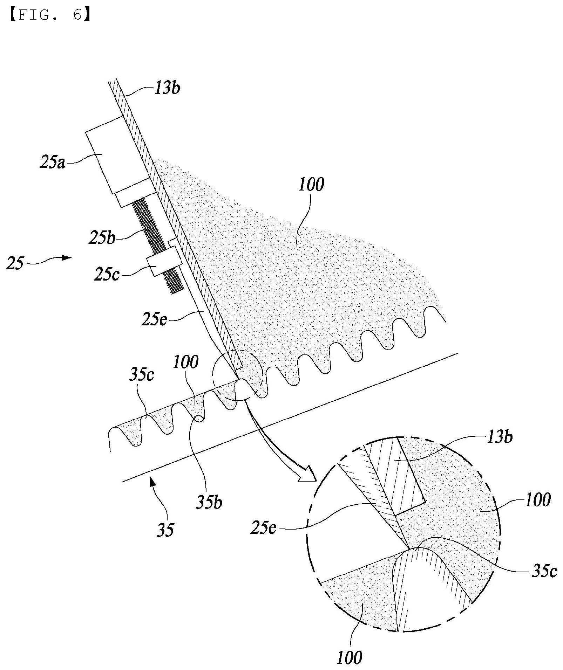

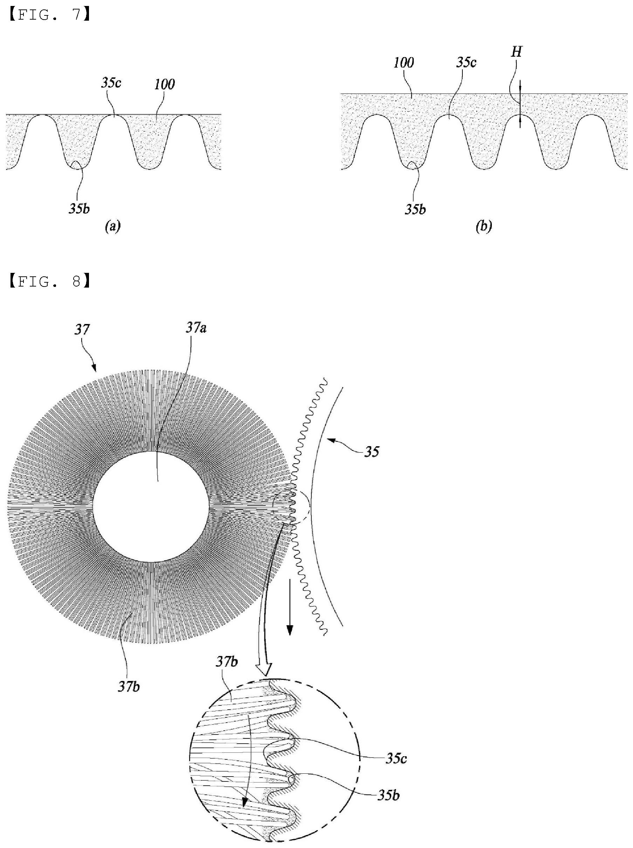

FIG. 1 is a perspective view of an apparatus 10 for supplying a fixed amount of electrode material powder according to an embodiment of the present invention, and FIG. 2 is a view illustrating the overall configuration and operation of the apparatus. FIG. 3 is a view illustrating an interlocking operation of the first and second brushes illustrated in FIG. 2. FIG. 4 is a view illustrating a detailed configuration of the hopper illustrated in FIG. 2, and FIG. 5 is a block diagram illustrating the operation of the hopper illustrated in FIG. 4. FIG. 6 is a view illustrating a configuration of the scraper illustrated in FIG. 2, and FIGS. 7A and 7B are views illustrating a method of adjusting the supply amount of the electrode material powder using the scraper illustrated in FIG. 6. FIG. 8 is a view illustrating the operation of the first brushing unit 37 illustrated in FIG. 2.

As illustrated, the apparatus 10 for supplying a fixed amount of electrode material powder according to the present embodiment includes a support structure 11, a hopper 13, a first conveyor 30, a conveying amount adjustment means, a second conveyor 40, and a pressing unit 50.

The support structure 11 includes two vertical fixing plates 11a having a predetermined thickness. The vertical fixing plates 11a are spaced apart from each other in parallel and accommodate the hopper 13, the first and second conveyors 30 and 40, and the conveying amount adjustment means therebetween, thereby providing support therefor.

The hopper 13 temporarily receives electrode material powder 100 supplied from the outside and discharges the electrode material powder 100 downward through an outlet 13c. The outlet 13c is inclined at an angle θ with respect to a horizontal floor surface. The angle θ may range from 5 degrees to 15 degrees. The hopper 13 may have a funnel shape. In this case, an included angle of the hopper 13 may be designed to be less than 90 degrees, for example, from 50 degrees to 80 degrees. This is because, when the included angle of the hopper 13 is 90 degrees or greater, the electrode material powder 100 may agglomerate and fail to flow downward, whereas, when the included angle is excessively small, the hopper 13 may be unable to accommodate a required amount of the electrode material powder 100.

An internal space 13a of the hopper 13 is defined by the vertical fixing plates 11a and two inclined plates 13b. The inclined plates 13b are plate-shaped members disposed to face each other and forming an included angle of approximately 60 degrees. Accordingly, the hopper 13 is formed by portions of the vertical fixing plates 11a and the inclined plates 13b.

In addition, an observation window 12 is provided in a portion of one of the vertical fixing plates 11a that covers the internal space 13a. The observation window 12 is a transparent window through which a remaining amount of the electrode material powder 100 accommodated in the internal space 13a can be observed from the outside. An operator may check the remaining amount of the electrode material powder 100 at any time through the observation window 12.

One or more level sensors 15 are installed on the inclined plates 13b inside the hopper 13 or on the vertical fixing plates 11a defining the internal space 13a of the hopper 13. The level sensors 15 detect the remaining amount of the electrode material powder 100 and transmit detected information to a controller 21. The operator may also wirelessly access the controller 21 using a smartphone and check, in real time, information regarding the remaining amount of the electrode material powder 100 provided by the controller 21.

Vibrators 17 configured to facilitate the discharge of the electrode material powder 100 are mounted on both inclined plates 13b. The vibrators 17 apply vibrational energy to the hopper 13 so that the electrode material powder 100 can be more easily discharged. For example, when the electrode material powder 100 agglomerates and does not readily flow downward, vibration may be applied to facilitate the discharge thereof. The vibrators 17 are also controlled by the controller 21.

A pressurizing unit 19 is installed at an upper portion of the hopper 13. The pressurizing unit 19 is supported by upper end portions of the inclined plates 13b and the vertical fixing plates 11a and seals the internal space 13a. The pressurizing unit 19 regulates the pressure inside the internal space 13a so that the electrode material powder 100 is discharged under a substantially constant pressure.

An outlet portion of the hopper through which the electrode material powder is discharged may be formed with the same inclination as the discharge belt so as to maintain a uniform gap with the discharge belt.

The electrode material powder 100 moves downward under gravity and is loaded onto the first conveyor 30, more specifically, onto a discharge belt of the first conveyor 30. When a large amount of the electrode material powder 100 remains in the internal space 13a, the electrode material powder 100 has a greater total weight and is therefore discharged under relatively greater pressure than when only a small amount remains. Accordingly, a pressure applied to the first conveyor 30 when only a small amount of the electrode material powder 100 remains is inevitably different from a pressure applied to the first conveyor 30 when a relatively large amount of the electrode material powder 100 remains.

The pressurizing unit 19 serves to reduce such a pressure difference. More specifically, as the remaining amount of the electrode material powder 100 in the internal space 13a gradually decreases, the pressurizing unit 19 increases the pressure inside the internal space 13a. When the pressure in the internal space 13a increases, the increased pressure pushes the electrode material powder 100 downward, such that the force applied to the first conveyor 30 can be maintained substantially constant. The pressurizing unit 19 is also controlled by the controller 21.

The pressurizing unit 19 may apply pressure to the electrode material powder 100 in a non-contact manner without directly contacting the electrode material powder 100. In this case, the pressurizing unit 19 may regulate the pressure applied to the electrode material powder 100 by supplying air at a predetermined pressure toward the interior of the hopper 13. Applying pressure to the electrode material powder 100 in a non-contact manner can prevent agglomeration of the electrode material powder 100. Alternatively, the pressurizing unit 19 may directly contact the electrode material powder 100 to apply pressure thereto.

The first conveyor 30 is installed below the hopper 13 and receives the electrode material powder discharged from the hopper 13 to convey the electrode material powder in the direction indicated by arrow a.

The first conveyor 30 includes a driving unit 31, a driving roller 32, a driven roller 33, and a discharge belt 35.

The driving unit 31 is fixed to an outer side of one of the vertical fixing plates 11a and outputs rotational power. The driving unit 31 includes a servo motor 31a and a reduction gear 31b. The servo motor 31a is operated by the controller 21, and a rotational speed of the servo motor 31a is adjusted by the controller 21.

Both end portions of the driving roller 32 are rotatably supported by the vertical fixing plates 11a, and the driving roller 32 rotates by receiving rotational power from the reduction gear 31b.

The driven roller 33 is disposed to correspond to the driving roller 32 and is positioned at a lower elevation than the driving roller 32. A straight line connecting the driving roller 32 and the driven roller 33 has the same inclination as the inclination angle θ of the outlet 13c of the hopper 13. A driven roller gear 34 is mounted on one end portion of the driven roller 33. The driven roller gear 34 is positioned outside the corresponding vertical fixing plate 11a, rotates together with the driven roller 33, and meshes with a brush gear 38 described below.

The discharge belt 35 is supported by the driving roller 32 and the driven roller 33 and is configured to circulate. The discharge belt 35 circulates around the driving roller 32 and the driven roller 33 to convey the electrode material powder 100 in the direction indicated by arrow a. The electrode material powder 100 conveyed by the first conveyor 30 is transferred to the second conveyor 40 and then passes through the pressing unit 50, where the electrode material powder 100 is rolled into a film shape.

In particular, powder receiving grooves 35b are formed in a surface of the discharge belt 35. The powder receiving grooves 35b are configured to receive the electrode material powder discharged from the hopper 13. The powder receiving grooves 35b extend in a width direction of the discharge belt 35 and are arranged at predetermined pitch intervals.

The electrode material powder 100 discharged from the hopper 13 is conveyed while being accommodated in the powder receiving grooves 35b. All of the powder receiving grooves 35b have the same volume. Accordingly, as illustrated in FIG. 7A, when each powder receiving groove 35b is completely filled with the electrode material powder 100, a volume or volumetric conveying amount of the electrode material powder 100 can be calculated based on the volume of the powder receiving grooves 35b and the rotational speed of the discharge belt 35. Naturally, as the rotational speed of the discharge belt 35 increases, the volume of the electrode material powder 100 discharged per unit time increases.

The powder receiving grooves 35b having the same size are formed at regular intervals in a longitudinal direction of the discharge belt 35. Accordingly, the same amount of the electrode material powder 100 can be conveyed along the longitudinal direction of the discharge belt 35. As a result, an electrode film having a uniform thickness in the longitudinal direction can be formed.

Another method of adjusting the amount of the electrode material powder 100 discharged and conveyed per unit time is to adjust a height H of the electrode material powder 100 illustrated in FIG. 7B. When the rotational speed of the discharge belt 35 is maintained constant, the amount of the electrode material powder 100 discharged increases as the height H of the electrode material powder 100 above protruding portions 35c of the discharge belt 35 increases. The height H is adjusted by a scraper 25 serving as a height adjustment unit, as described below.

Accordingly, when both the rotational speed of the discharge belt 35 and the loading height H of the electrode material powder 100 are adjusted, the conveying amount of the electrode material powder 100 can be freely controlled.

The conveying amount adjustment means adjusts the amount of the electrode material powder conveyed by the first conveyor 30. More specifically, the conveying amount adjustment means removes an upper portion of the electrode material powder carried on the discharge belt 35 and discharged from the lower portion of the hopper 13, thereby adjusting the amount of the electrode material powder being conveyed.

As illustrated in FIG. 6, the conveying amount adjustment means includes a blade 25e and a height adjustment unit. The height adjustment unit includes a height adjustment motor 25a, a screw rod 25b, and a carrier 25c.

The height adjustment motor 25a is a servo motor operated by the controller 21. The height adjustment motor 25a is mounted on a lower outer portion of the inclined plate 13b of the hopper 13. The height adjustment motor 25a operates in response to a control signal from the controller 21 to rotate the screw rod 25b in either direction.

The screw rod 25b is a lead screw having an external thread and is threadedly engaged with the carrier 25c. The carrier 25c moves linearly in response to axial rotation of the screw rod 25b. The carrier 25c is coupled to the blade 25e. In response to the linear movement of the carrier 25c, the blade 25e may move downward in the direction indicated by arrow d or move upward in the opposite direction.

The blade 25e is a plate-shaped member configured to be raised and lowered by the height adjustment motor 25a. The electrode material powder 100 carried on the discharge belt 35 and discharged from the hopper 13 passes below a lower end portion of the blade 25e. The height H illustrated in FIG. 7B can be adjusted by adjusting the position of the blade 25e. FIG. 6 illustrates a state in which the blade 25e is lowered to its lowest position such that the lower end portion of the blade 25e almost contacts the protruding portions 35c. The blade 25e may be formed of an elastically deformable material, such as silicone or rubber. Alternatively, the blade 25e may be formed of a metal plate.

As described above, FIG. 7A illustrates the discharge belt 35 after passing below the blade 25e in a state in which the lower end portion of the blade 25e is positioned as close as possible to the protruding portions 35c. The electrode material powder 100 has been substantially completely scraped off from the protruding portions 35c and remains only in the powder receiving grooves 35b.

FIG. 7B illustrates the discharge belt 35 after passing below the blade 25e in a state in which the blade 25e is raised by the height H. As illustrated, an upper surface of the electrode material powder 100 is positioned at the height H above the protruding portions 35c.

Reference numeral 27 in FIG. 2 denotes a sag prevention unit. The sag prevention unit 27 prevents the discharge belt 35 from sagging downward due to the weight of the electrode material powder 100. The configuration of the sag prevention unit 27 may be variously modified, provided that it can perform this function. In the present embodiment, the sag prevention unit 27 includes a plurality of support rollers 27a. The support rollers 27a support the discharge belt 35 while being arranged as closely as possible to one another. The support rollers 27a can reduce friction with the discharge belt 35 and thereby prevent damage to the discharge belt 35.

Alternatively, the sag prevention unit 27 may support the discharge belt 35 using a rigid plate-shaped member.

The first brushing unit 37 is provided at an end portion of the first conveyor 30. The first brushing unit 37 brushes the electrode material powder 100 out of the powder receiving grooves 35b so that the electrode material powder 100 falls onto the second conveyor 40 without remaining in the powder receiving grooves 35b. When the discharge belt 35 travels around the driven roller 33, most of the electrode material powder 100 falls onto the second conveyor 40 under gravity. However, the electrode material powder 100 accommodated in the powder receiving grooves 35b may remain therein due to the cohesive properties of the electrode material powder 100. The first brushing unit 37 serves to sweep the residual electrode material powder 100 out of the powder receiving grooves 35b.

The first brushing unit 37 includes a brush shaft 37a, bristles 37b, and the brush gear 38. The brush shaft 37a is a shaft having both end portions rotatably supported by the vertical fixing plates 11a, and one end portion of the brush shaft 37a is fixed to the brush gear 38. Since the brush gear 38 meshes with the driven roller gear 34, the brush shaft 37a rotates together with the driven roller 33 when the first conveyor 30 operates.

The bristles 37b are brush hairs fixed to the brush shaft 37a. As illustrated in FIG. 8, when the brush shaft 37a rotates, the bristles 37b extend into the powder receiving grooves 35b and brush residual electrode material powder 100 out of the powder receiving grooves 35b. The bristles 37b may be formed of various materials.

The second conveyor 40 serves to convey the electrode material powder transferred from the first conveyor 30 toward the pressing unit 50.

The second conveyor 40 includes a driving unit 41, a driving roller 42, a driven roller 43, and a conveying belt 45.

The driving unit 41 includes a servo motor 41a and a reduction gear 41b. The servo motor 41a outputs rotational power in response to a control signal from the controller 21. The rotational power of the servo motor 41a is transmitted to the driving roller 42 through the reduction gear 41b.

The driving roller 42 rotates by receiving the rotational power from the driving unit 41. Both end portions of the driving roller 42 are rotatably supported by the vertical fixing plates 11a.

The driven roller 43 is disposed to correspond to the driving roller 42, and both end portions of the driven roller 43 are rotatably supported by the vertical fixing plates 11a in the same manner as the driving roller 42. The driven roller 43 is positioned at a lower elevation than the driving roller 42.

A driven roller gear 44 is mounted on one end portion of the driven roller 43. The driven roller gear 44 is positioned outside one of the vertical fixing plates 11a, rotates together with the driven roller 43, and meshes with a brush gear 48 described below.

The conveying belt 45 is wound around the driving roller 42 and the driven roller 43 and is configured to circulate. An uneven portion 45a is formed on a surface of the conveying belt 45. The uneven portion 45a prevents slippage of the electrode material powder. For example, the uneven portion 45a prevents the electrode material powder from escaping outward in the width direction of the conveying belt 45. The shape of the uneven portion 45a may be variously modified, provided that it can perform this function. Since the uneven portion 45a serves to stably convey the electrode material powder, the uneven portion 45a may have a smaller depth and may be more densely formed than the powder receiving grooves 35b. The discharge belt 35 and the conveying belt 45 may be formed of a material in which polyurethane projections are attached to a plastic material such as nylon. However, the discharge belt 35 and the conveying belt 45 may be formed of various other materials.

The supply amount of the electrode material powder can also be adjusted by adjusting the speeds of the discharge belt 35 and the conveying belt 45. For example, when the conveying belt 45 moves more slowly than the discharge belt 35, a larger amount of the electrode material powder accumulates on the conveying belt 45, and thus a larger amount of the electrode material powder can be conveyed toward the first and second pressing rollers 51 and 55.

Accordingly, the fixed-amount supply of the electrode material powder can be controlled by adjusting the height of the blade 25e and can also be controlled by varying the speeds of the discharge belt 35 and the conveying belt 45.

The second conveyor 40 conveys the electrode material powder transferred from the first conveyor 30 in the direction indicated by arrow e and transfers the electrode material powder to the pressing unit 50. The second conveyor 40 is inclined by approximately 10 degrees with respect to a horizontal floor surface.

A second brushing unit 47 is provided at an end portion of the second conveyor 40. The second brushing unit 47 serves to brush residual electrode material powder adhering to the conveying belt 45 downward. When the conveying belt 45 travels around the driven roller 43, most of the electrode material powder falls under gravity. However, some of the electrode material powder may remain attached to the conveying belt 45, and the second brushing unit 47 brushes such residual electrode material powder off the conveying belt 45.

The second brushing unit 47 has substantially the same configuration as the first brushing unit 37. More specifically, the second brushing unit 47 includes a brush shaft 47a, the brush gear 48, and bristles 47b. The brush shaft 47a is a shaft rotatably supported by the vertical fixing plates 11a and has the brush gear 48 mounted on one end portion thereof. The brush gear 48 receives rotational power from the driven roller gear 44. The bristles 47b are brush hairs fixed to the brush shaft 47a and brush downward residual material adhering to the uneven portion 45a of the conveying belt 45.

The pressing unit 50 presses the electrode material powder transferred from the second conveyor 40 and forms the electrode material powder into a film having a predetermined thickness.

The pressing unit 50 includes a first pressing roller 51, a first roller driving unit 52, a second pressing roller 55, and a second roller driving unit 56.

The first pressing roller 51 and the second pressing roller 55 are disposed parallel to each other and are spaced apart from each other by a predetermined distance. A gap between the first pressing roller 51 and the second pressing roller 55 is adjustable. The first pressing roller 51 is driven by the first roller driving unit 52, and the second pressing roller 55 is driven by the second roller driving unit 56. The first roller driving unit 52 and the second roller driving unit 56 operate independently of each other. The first pressing roller 51 and the second pressing roller 55 rotate in opposite directions.

Various ratios between the rotational speeds of the first and second pressing rollers 51 and 55 may be used. When the rotational speed of the first pressing roller 51 is defined as 1, it is preferable that the rotational speed of the second pressing roller 55 be adjusted to 1 or greater, for example, from 1.2 to 2. When the second pressing roller 55 rotates faster than the first pressing roller 51, the electrode material powder 100 can be separated from the first pressing roller 51, adhere to the second pressing roller 55, and move along the second pressing roller 55.

Each of the first pressing roller 51 and the second pressing roller 55 may be formed of special steel having a chrome-plated surface.

The first pressing roller 51 and the second pressing roller 55 press the electrode material powder 100 transferred from the second conveyor 40 while passing the electrode material powder 100 therebetween, thereby forming the electrode material powder 100 into a film having a predetermined thickness. A film-shaped electrode material 70 that has passed between the first and second pressing rollers 51 and 55 may be further compressed to a smaller thickness through a subsequent process.

Although the present invention has been described in detail with reference to specific embodiments, the present invention is not limited to the above-described embodiments, and various modifications may be made by those skilled in the art without departing from the technical spirit and scope of the present invention.

### [Industrial Applicability]

The present invention has industrial applicability because it enables real-time adjustment of the supply amount of electrode material powder and allows a dry electrode film having a uniform density and thickness to be manufactured by supplying an accurate volume of the electrode material powder.

## Claims

1. An apparatus for supplying a fixed amount of electrode material powder, comprising:
a hopper configured to receive electrode material powder supplied from an outside source and discharge the electrode material powder downward;
a first conveyor installed below the hopper and configured to receive and convey the electrode material powder discharged from the hopper;
a conveying amount adjustment means configured to adjust an amount of the electrode material powder conveyed by the first conveyor;
a second conveyor disposed below the first conveyor and configured to receive and convey the electrode material powder conveyed by the first conveyor; and
a pressing unit configured to press the electrode material powder transferred from the second conveyor to form the electrode material powder into a film having a predetermined thickness.

2. The apparatus of claim 1, wherein the hopper is provided with a vibrator configured to facilitate discharge of the electrode material powder.

3. The apparatus of claim 1, wherein the first conveyor comprises:
a driving roller configured to rotate by receiving power from a driving unit;
a driven roller disposed to correspond to the driving roller; and
a discharge belt supported by the driving roller and the driven roller and configured to circulate,
wherein a plurality of powder receiving grooves configured to receive the electrode material powder discharged from the hopper are formed in a surface of the discharge belt.

4. The apparatus of claim 3, wherein the powder receiving grooves extend in a width direction of the discharge belt, are arranged at predetermined pitch intervals, and define spaces having the same volume.

5. The apparatus of claim 4, wherein the conveying amount adjustment means is configured to adjust the amount of the electrode material powder being conveyed by removing an upper portion of the electrode material powder, and comprises:
a blade configured to be raised and lowered above the discharge belt; and
a height adjustment unit configured to raise and lower the blade to adjust a distance between the blade and the discharge belt.

6. The apparatus of claim 4, wherein a first brushing unit is provided at an end portion of the first conveyor and is configured to brush the electrode material powder out of the powder receiving grooves so that the electrode material powder falls onto the second conveyor.

7. The apparatus of claim 1, wherein the second conveyor comprises:
a driving roller configured to rotate by receiving rotational power from a driving unit;
a driven roller disposed to correspond to the driving roller; and
a conveying belt wound around the driving roller and the driven roller and configured to circulate,
wherein an uneven portion configured to prevent slippage of the electrode material powder is formed on a surface of the conveying belt.

8. The apparatus of claim 1, wherein the pressing unit comprises a pair of pressing rollers spaced apart from each other by a predetermined distance and configured to press the electrode material powder passing therebetween.

9. The apparatus of claim 1, further comprising a pressurizing unit configured to apply a predetermined pressure to the electrode material powder accommodated in the hopper.

10. The apparatus of claim 1, wherein:
the hopper has a funnel shape and comprises downwardly inclined plates and vertical fixing plates; and
a level sensor configured to detect a level of the electrode material powder contained in the hopper is disposed on at least one of the inclined plates inside the hopper and the vertical fixing plates.

11. The apparatus of claim 1, further comprising a sag prevention unit comprising a plurality of support rollers and disposed on a surface of the discharge belt opposite to a surface facing the hopper.

12. An apparatus for supplying a fixed amount of electrode material powder, comprising:
a hopper having a downwardly narrowing inclined shape, configured to receive electrode material powder supplied from an outside source, and having an outlet portion configured to discharge the electrode material powder in an inclined direction;
a first conveyor installed below the hopper, having substantially the same inclination as the outlet portion of the hopper, and configured to receive and convey the electrode material powder discharged from the outlet portion of the hopper, the first conveyor comprising a circulating discharge belt in which powder receiving grooves having the same height are formed at regular intervals in longitudinal and transverse directions;
a conveying amount adjustment means configured to adjust an amount of the electrode material powder conveyed by the first conveyor;
a second conveyor inclinedly disposed below the first conveyor and comprising a circulating conveying belt configured to receive and convey the electrode material powder conveyed by and falling from the first conveyor; and
a pressing unit comprising a first pressing roller and a second pressing roller defining a gap therebetween and configured to press the electrode material powder transferred from and falling from the second conveyor to form the electrode material powder into a film having a predetermined thickness.

13. The apparatus of claim 12, wherein the second pressing roller rotates at a higher speed than the first pressing roller such that a film-shaped electrode material formed by passing between the first pressing roller and the second pressing roller adheres to and moves along the second pressing roller.
